# NOUVEAU FASCICULE DE BREVET EUROPEEN

(11) **EP 0 223 683 B2**
(45) Date de publication et mention de la décision concernant l'opposition: **04.01.1995**
(45) Mention de la délivrance du brevet: 28.03.1990
(21) Numéro de dépôt: 86402415.3
(22) Date de dépôt: 28.10.1986
(51) Int. Cl.: B65G 37/02, B23Q 7/14

(54) **Installation pour l'assemblage et/ou l'usinage de pièces portées par des palettes et palette faisant partie de cette installation**
Vorrichtung zum Zusammenbau und/oder Gebrauch von Teilen, die von Paletten getragen werden sowie Palette für eine solche Vorrichtung
Apparatus for the assembly and/or application of parts carried by pallets, and pallet for such an apparatus

(30) Priorité: 29.10.1985 FR 8516095; 21.04.1986 FR 8605729
(43) Date de publication de la demande: 27.05.1987
(73) Titulaire: Prodel, Jacques, 60170 Ribecourt (FR)
(72) Inventeur: Prodel, Jacques, 60170 Ribecourt (FR)
(74) Mandataire: Netter, André

(56) Documents cités:
- EP-A- 0 050 080
- EP-A- 0 088 680
- EP-A- 0 115 357
- DE-A- 1 658 299
- DE-A- 2 752 268
- DE-A- 3 411 452
- DE-B- 1 267 608
- FR-A- 2 185 013
- FR-A- 2 545 398
- US-A- 4 416 202

## Description

L'invention concerne une installation selon le préambule de la revendication 1, notamment une installation pour l'assemblage et/ou l'usinage de pièces portées par des palettes circulant suivant des voies pour amener les pièces qu'elles portent en des postes d'assemblage et/ou d'usinage, une palette étant le plus souvent immobile au cours de l'assemblage et/ou de l'usinage et étant déplacée par des moyens d'entraînement pour amener ladite pièce en un autre poste d'assemblage et/ou d'usinage, jusqu'à ce que tous les assemblages et usinages, qu'ils soient manuels ou automatiques, soient effectués et la pièce délivrée.

Des installations de ce type sont connues par exemple des documents FR-A-2185 013, EP-A-088 680 et DE-B-1267 608. De telles installations trouvent une utilisation de plus en plus étendue, notamment pour constituer des ateliers flexibles, c'est-à-dire qui puissent être adaptés rapidement et facilement à différents types de traitement de pièces et/ou à différentes pièces.

Le temps nécessaire pour l'assemblage et/ou l'usinage d'une pièce ou de plusieurs pièces portées par une palette peut varier d'un poste à l'autre de sorte que, la plupart du temps, il existe dans l'installation des palettes en stationnement. Comme les voies empruntées par les palettes sont, dans chaque poste, habituellement en très petit nombre, il se crée des files de palettes en attente qui peuvent être de grande longueur.

L'invention a pour but de fournir une installation dans laquelle les moyens moteurs pour l'entraînement des palettes sont opératoires même s'ils ont une puissance relativement faible.

C'est un autre but de l'invention de fournir une telle installation dans laquelle les problèmes posés par l'arrêt d'une multiplicité de palettes les unes à la suite des autres, et en butée les unes contre les autres, sont résolus d'une manière simple et efficace.

C'est aussi un but de l'invention de fournir une telle installation dans laquelle l'immobilisation d'une palette en mouvement est obtenue sans difficulté, même dans le cas où la palette porte une lourde charge.

C'est également un but de l'invention de fournir une telle installation dans laquelle le positionnement précis d'une palette pour le traitement de la ou des pièces qu'elle porte est obtenu par des moyens simples.

L'invention s'applique aussi bien aux installations dans lesquelles une palette conserve une orientation constante tout au long de son parcours, même si celui-ci comprend des tronçons de directions différentes, notamment perpendiculaires, qu'à celles dans lesquelles la palette a une orientation dépendant de la direction du tronçon qu'elle parcourt.

Elle s'applique aussi bien aux installations dans lesquelles les tronçons parcourus par les palettes sont rectilignes qu'à celles dans lesquelles le parcours des palettes présente des parties curvilignes, et cela avec ou sans changement de direction dans les carrefours.

Elle s'applique en particulier aux installations dans lesquelles les palettes suivent des parcours horizontaux ou très sensiblement horizontaux, comme c'est le cas dans la plupart des installations de ce type actuellement utilisées.

Elle vise notamment les installations dans lesquelles les brins d'entraînement coopèrent avec une partie marginale d'une palette, la coopération ayant lieu aussi bien au cours d'une phase d'entraînement effectif de la palette qu'au cours d'une phase où celle-ci est immobilisée.

L'invention s'applique à une installation faisant appel à des brins de courroie pour l'entraînement de la palette, mes également à des installations dans lesquelles les brins d'entraînement sont de nature différente, par exemple comportent des écailles ou bien sont des chaînes, des câbles à saillies, etc.

C'est également un but important de la présente invention de fournir une installation de ce type qui soit d'une grande versatilité, c'est-à-dire qui puisse satisfaire plus facilement que les installations connues une diversité d'utilisations.

C'est en particulier un but de l'invention de fournir une telle installation dans laquelle il est possible de faire effectuer à volonté aux palettes des trajets au cours desquels elles conservent une orientation constante ou bien au cours desquels l'orientation de la palette varie, par exemple pour satisfaire à des conditions de présentation des pièces qu'elles portent à une machine d'assemblage ou d'usinage ou à un ouvrier ou ouvrière chargé d'une intervention manuelle.

C'est un autre but de l'invention de fournir une telle installation dans laquelle un changement de direction dans la circulation d'une palette passant d'une voie à une voie perpendiculaire s'effectue sans chocs.

C'est encore un but de l'invention de fournir une telle installation dans laquelle les palettes circulent à très grande vitesse, en « flux tendu continu », c'est-à-dire se succédant rapidement pour alimenter sans interruption notable les divers postes de travail, y compris lorsque les trajets de palettes comprennent des changements de direction perpendiculaires, de simples virages et/ou des carrefours très nombreux.

C'est également un but de l'invention de fournir une telle installation, qui puisse sans difficulté assurer le traitement de pièces relativement lourdes sans qu'il en résulte des difficultés d'entraînement et/ou d'arrêt de la ou des palettes, ni d'indicents provoqués précisément par la masse élevée des pièces portées par les palettes.

C'est aussi un but de l'invention de fournir une installation simple à construire, donc d'un prix de revient peu élevé, et d'un fonctionnement sûr.

Une installation selon l'invention pour le déplacement d'une ou plusieurs palettes porte-pièce(s) pour l'assemblage et/ou l'usinage d'une pièce ou de pièces portée(s) par la ou les palettes, dans laquelle une palette comporte des moyens de roulement pour son déplacement sur un support et des moyens pour son entraînement par un brin en mouvement continu en fonction du déplacement à réaliser, est caractérisée en ce que le support est un plancher et les moyens de roulement sont autodirecteurs, c'est-à-dire propres à faire circuler la palette sur le plancher suivant un trajet quelconque, rectiligne ou curviligne, en fonction de moyens de guidage avec lesquels elle coopère, et ne sont en eux-mêmes guidés d'aucune manière, l'entraînement de la palette ayant lieu par une plaquette qu'elle comporte, montée élastiquement et propre à coopérer à frottement avec un brin en mouvement, tout en pouvant se déplacer par rapport à celui-ci, ou simultanément avec plusieurs brins en mouvement dirigés différemment, permettant ainsi le déplacement de la palette sur le plancher suivant un mouvement, indépendant de la direction du ou des brins, qui conserve ou modifie, selon le guidage de la palette, l'orientation de celle-ci dans l'espace pendant ses changements de direction.

Dans une installation selon l'invention, il y a indépendance entre le poids de la palette, y compris la charge qu'elle porte, et la puissance nécessaire pour l'entraînement de ladite palette.

Le frottement entre le brin d'entraînement et la plaquette, lorsque la palette est immobilisée, n'a pas de rapport avec le poids de la palette.

En outre, le montage élastique de la plaquette de frottement sur le corps de la palette permet de prévoir des niveaux différents pour le brin d'entraînement sans que l'opérabilité de celui-ci en soit affectée.

L'invention vise notamment une installation dans laquelle les palettes sont rectangulaires et leur entraînement est marginal et est alors caractérisée en ce que la plaquette de frottement ou aileron est monté sur un côté du corps de la palette par l'intermédiaire d'une lame élastique, au couple développé sur la palette par l'action marginale s'opposant des moyens pour guider la palette suivant la trajectoire prévue.

A cet effet, la palette comprend, sur son bord opposé au bord d'entraînement, des moyens pour coopérer avec une réglette de guidage solidaire du fond du poste.

Une autre caractéristique importante réside dans ce fait que, sur le côté de la palette comportant la plaquette ou aileron d'entraînement, on prévoit des moyens pour le guidage de la palette par coopération avec le brin d'entraînement lui-même.

Le moyen de roulement équipant la palette, et par l'intermédiaire duquel celle-ci se déplace sur le fond, étant un moyen de roulement à billes introduit le minimum de résistance pour l'avancement de la palette malgré le poids élevé de celle-ci, compte tenu de la pièce qu'elle porte.

Dans la Demande de Brevet français FR-A-2 185 013 est décrit un groupe transporteur comprenant un chemin de transport situé dans un plan horizontal, ainsi que des palettes présentant de chaque côté des roues non orientables par lesquelles elles reposent sur le chemin de transport. L'entraînement des palettes est réalisé par des mâchoires qu'elles comportent et susceptibles de coopérer par serrage avec un câble mobile propre ainsi à entraîner la palette dans le même mouvement que celui du câble.

Dans la Demande de Brevet Européen 0 088 680, une palette comprend des billes pour son déplacement par roulement et ces billes sont guidées dans des rails. Le mouvement de la palette est ainsi conforme à la configuration du rail.

Dans la DAS 1 267 608, un réceptacle de caisse présente des roues non orientables circulant sur un plancher limité transversalement par des rebords verticaux qui jouent le rôle de rails.

L'installation décrite dans le Brevet USA No 4 416 202 est destinée à permettre à des ouvriers de déplacer des pièces relativement lourdes d'un poste de travail à un autre poste de travail en les faisant porter par des palettes. Ces palettes roulent sur une piste plate par l'intermédiaire de billes qui sont guidées par des galets qu'elles comportent sur leur fond et qui coopèrent avec des rebords que présente la piste. Cette installation ne comprend aucun moyen d'entraînement pour les palettes autres que la main de l'ouvrier.

Dans la description qui suit, faite à titre d'exemple, on se réfère aux dessins annexés, dans lesquels :
- la figure 1 est une vue schématique en plan par dessous d'une palette et des moyens de guidage et d'entraînement adjacents ;
- la figure 2 est une vue en plan par dessus d'une palette ;
- la figure 3 est une vue d'une palette, en coupe suivant la ligne III-III de la figure 1, mais à plus grande échelle que cette dernière ;
- la figure 4 est une vue analogue à la figure 1, mais pour des moyens de guidage et d'entraînement de configuration différente ;
- la figure 5 est une vue analogue à une partie de la figure 3, mais pour un moyen de guidage différent de celui prévu dans ladite figure 3 ;
- la figure 6 est une vue en coupe verticale d'une partie d'une installation selon l'invention, au voisinage d'une zone ou une palette, après avoir circulé dans une direction, va circuler dans une direction perpendiculaire ;
- la figure 7 est une vue en plan correspondant à la figure 6 ;
- la figure 8 est une vue en coupe suivant la ligne VIII-VIII de la figure 7, mais à plus grande échelle ;
- la figure 9 est analogue à la figure 2, mais pour une autre forme de réalisation de la palette ;
- la figure 10 est une vue schématique en plan d'une installation au droit d'un emplacement prévu pour l'immobilisation d'une palette en une position prédéterminée ;
- la figure 11 est une vue en coupe selon la ligne XI-XI de la figure 10 ;
- la figure 12 est une vue en coupe selon la ligne XII-XII de la figure 10, mais à plus grande échelle ;
- la figure 13 est une vue schématique en plan correspondant à une partie de la figure 10, mais à plus grande échelle ;
- la figure 14 est une vue par la tranche d'une palette, pour une autre forme de réalisation, en circulation sur un plancher d'une installation, partie en élévation, partie en coupe;
- la figure 15 est une vue en plan, par dessous, d'une telle palette, en cours de circulation, le plancher étant supposé transparent ;
- la figure 16 est une vue en coupe analogue à une partie de la figure 14, mais à 90° de celle-ci ;
- la figure 17 est relative à une variante d'un volet ;
- la figure 18 est une vue en plan par dessous d'une partie d'un poste ou module d'une installation montrant une palette en un emplacement où s'effectue un changement de direction de son trajet, le plancher étant supposé transparent;
- la figure 19 est une vue en coupe selon la ligne XIX-XIX de la figure 18, mais à plus grande échelle ;
- la figure 20 est une vue en plan montrant une palette circulant dans une partie curviligne de sa trajectoire;
- la figure 21 est une vue schématique en plan d'un module ou poste incorporant les caractéristiques de l'invention ;
- la figure 22 est une vue schématique en plan d'une installation comprenant le poste montré sur la figure 21 ;
- la figure 23 est une vue analogue à la figure 22, mais comprenant, pour le raccordement des voies aller et retour, des modules d'extrémités différents de ceux que comporte l'installation montrée sur la figure 22 ;
- la figure 24 est une vue analogue à la figure 23, mais pour une variante.

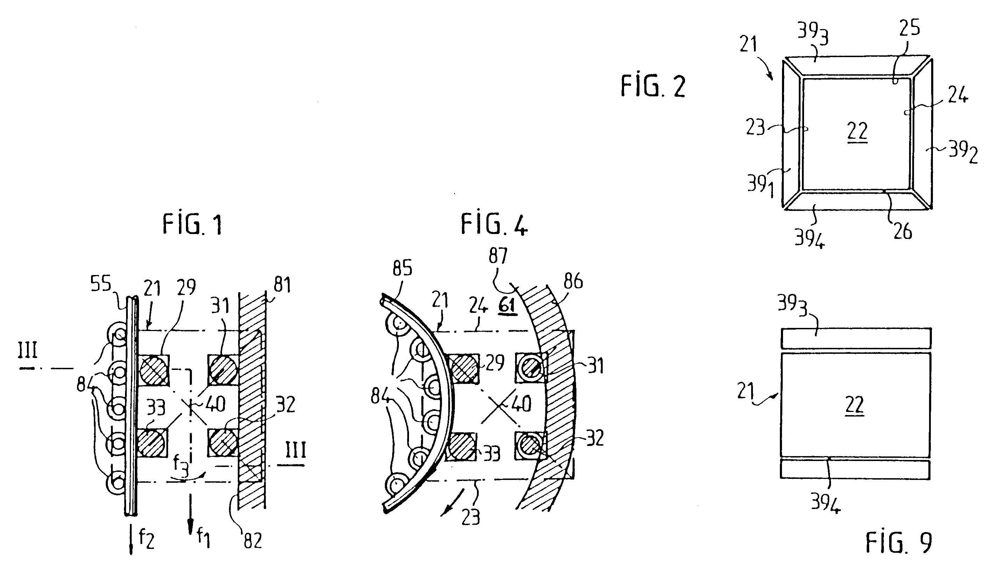

Une palette 21 (figures 1 à 3), prévue pour porter une pièce ou un ensemble de pièces à assembler ou à usiner, a un contour en général rectangulaire, dans la forme de réalisation un contour carré, et comprend un plateau 22, ou corps de palette, présentant des faces latérales 23, 24 et 25, 26 (figure 2), une face supérieure 27 et une face inférieure 28. Sur le plateau 22 sont fixés, à sa face inférieure 28, au voisinage de ses angles, quatre plots 29, 31, 32, 33 (figure 1).

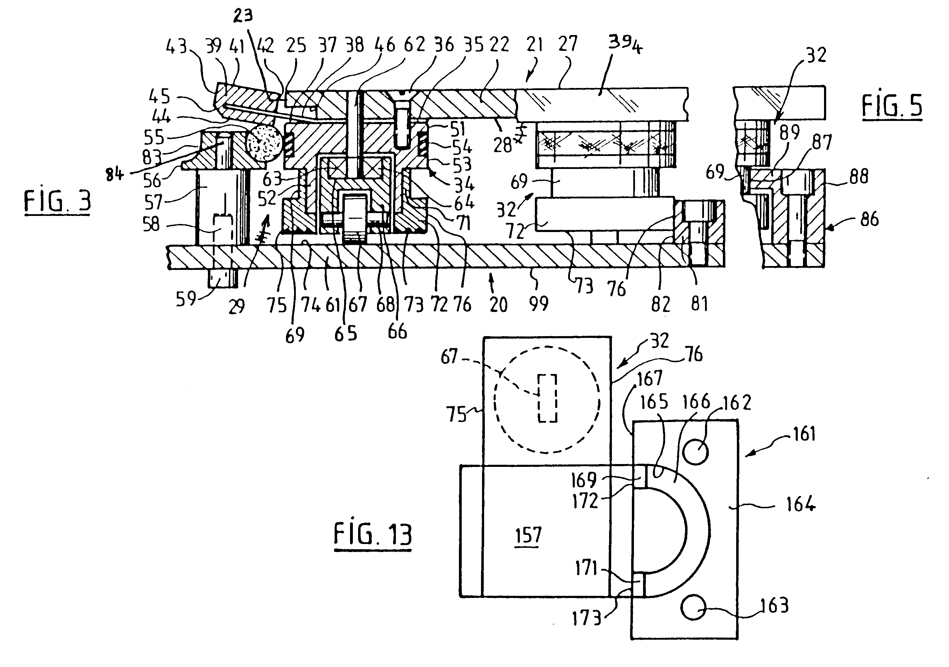

Chacun des plots, par exemple le plot 29, comprend un corps cylindrique 34 (figure 3) présentant à sa partie supérieure un forage taraudé 35 pour sa fixation au plateau 22 par une vis 36. Entre la face supérieure 37 du corps 34 du pot et la face inférieure 28 du plateau 22 est serrée, par l'effet de la vis 36, une bande ou lame 38, en acier à ressort, ayant la longueur du côté du plateau 22 et une largeur suffisante pour qu'elle fasse saillie par rapport au bord correspondant de celui-ci, en l'espèce la face latérale 23, et à l'extrémité de la bande 38 est fixé un aileron ou volet 39, limité par une face supérieure 41, une face interne 42, une face externe 43, une face inférieure 44, les faces 43 et 44 étant raccordées par une face oblique 45. La face inférieure 28 du plateau 22 présente périphériquement un décrochement 46, le bord du plateau 22 étant ainsi moins épais que son corps.

Le corps 34 du plot présente une partie supérieure 51 de diamètre plus grand que sa partie inférieure 52 et sur la surface latérale 53 de la partie supérieure 51 est présente une garniture d'amortissement 54. Celle-ci est propre à coopérer avec une courroie 55, à section circulaire dans l'exemple, avantageusement en caoutchouc ou matériau analogue, qui coopère, par sa partie opposée à celle coopérant avec la garniture 54, avec de petites poulies ou roulettes 56 montées folles sur de petits piliers 57 fixés par des vis 58 à tête 59 sur le plancher 61 d'un poste ou module 20 faisant partie d'une installation pour l'assemblage et/ou l'usinage de pièces.

Un goujon 62, fixé sur le plateau 22 de la palette, contribue à la fixation du plot 29. Le goujon 62, qui traverse la partie supérieure 51 du plot, porte la partie non-rotative 63 d'un roulement à billes 64 dont la partie rotative 65 sert au montage à rotation d'un support 66 d'un galet 67 dont l'axe 68 est perpendiculaire à l'axe du roulement à billes 64 ; le galet 67 fait saillie vers le bas par rapport au pot 29 ; il est monté sur son axe 68 par l'intermédiaire d'un roulement à billes.

Le support 66 est entouré par la partie inférieure cylindrique 69, ou jupe, du plot 29, de diamètre inférieur à la partie supérieure 51. Sur la jupe 69 est monté, par enfoncement à force de son appendice tubulaire supérieur 71, un sabot 72, en forme de parallélépipède rectangle, faisant partie du pot, et dont la face inférieure 73 est en regard de la face supérieure 74 du fond ou plancher 61 du poste, mais à distance de celui-ci. Les faces latérales 75 et 76 dudit sabot, à configuration carrée, sont entre elles à une distance égale au diamètre de la partie supérieure 34 du plot.

Dans la partie d'installation montrée sur la figure 1, la palette 21 progresse dans le sens de la flèche f₁ par l'effet d'entraînement provoqué par la courroie 55 se déplaçant dans le sens de la flèche f₂, parallèle à la flèche f₁, coopérant avec la face inférieure 44 de l'aileron 39 sous l'effet de la pression développée par la lame de ressort 38. La palette roule par ses galets 67, disposés suivant une configuration carrée, sur la face supérieure 74, horizontale, du plancher 61, en offrant ainsi au déplacement une résistance extrêmement faible, même si le poids de la pièce ou des pièces supportées par la palette est élevé. L'action de la courroie 55 sur l'aileron marginal 39 tend à faire tourner la palette 21 autour de son axe central 40 dans le sens de la flèche f₃, mais la rotation est empêchée par la coopération de la partie plane 76 du sabot 72 du plot 32 avec la face plane verticale 82 d'une réglette de guidage 81, fixée sur le plancher 61, et rectiligne. Par réaction, le plot 29 de la palette 21 est appliqué, par sa garniture d'amortissement 54, contre la courroie 55 qui joue ainsi également un rôle de guidage pour la palette. La courroie 55 prend appui à cet effet contre les faces incurvées 83 des petites poulies 56.

Dans la disposition montrée sur la figure 1, les axes 84 des petites poulies 56 sont alignées rectilinéairement.

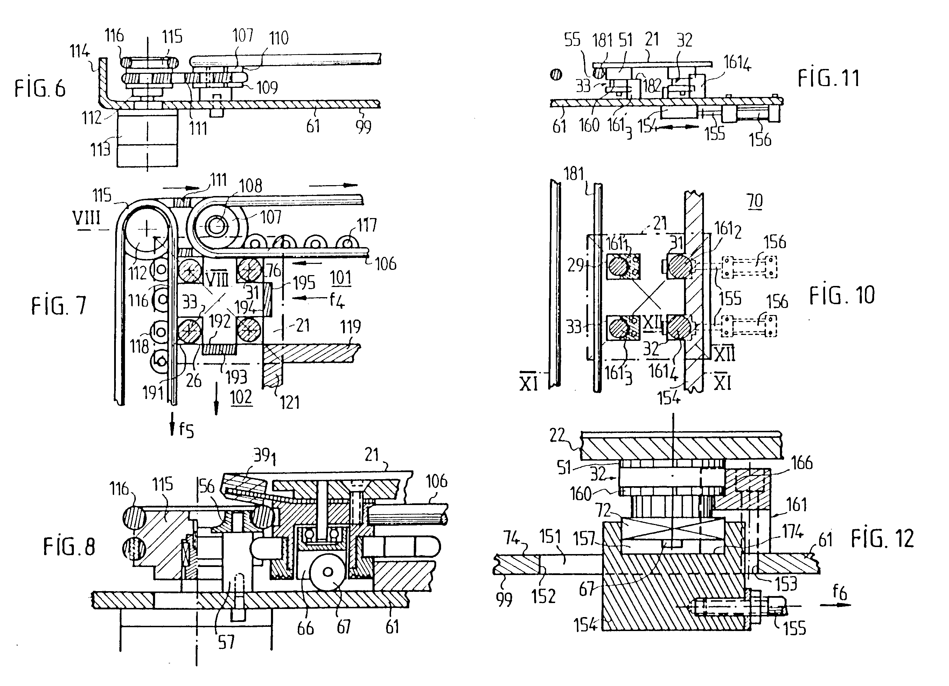

Dans la disposition montrée sur la figure 4, lesdits axes 84 sont disposés suivant un tracé curviligne, par exemple circulaire, le brin 85 de courroie étant ainsi disposé en arc de cercle. La réglette 86 de guidage fixée sur le plancher 61 et avec laquelle coopèrent les plots 31 et 32 de la palette a alors une face interne 87 disposée concentriquement à la courroie 85.

La réglette 86 a une section en L inversé, comme montré sur la figure 5, avec une branche verticale 88 d'une hauteur suffisante pour que la face de guidage 87 que présente la partie horizontale 89 se trouve en regard de la partie cylindrique ou jupe 69 du plot 31 ou 32.

Dans cette réalisation, la palette 21 décrit un arc de cercle, la ligne moyenne restant constamment tangente à la ligne moyenne du trajet ou confondue avec elle.

Aussi longtemps que la palette 21 repose sur le fond 61 du poste par ses galets de roulement 67, le frottement entre la courroie 55 et la palette est indépendant du poids de cette dernière. Il dépend seulement de la force élastique qu'exerce la lame de ressort 38 et qui est choisie pour que l'effort d'entraînement développé par la courroie 55 reste minimal tout en assurant un entraînement effectif.

Ce dernier reste obtenu pour différents niveaux de la courroie d'entraînement par rapport à la face supérieure 74 du fond 61, aussi longtemps que la lame élastique 38 est déformée.

Même si une longue rangée ou file de palettes coopèrent par leur aileron avec un même brin de courroie, elles n'exercent sur celle-ci qu'un freinage faible et la courroie n'exerce sur l'ensemble des palettes qu'un effort d'entraînement faible, mais suffisant pour l'entraînement des palettes, lorsque la rangée n'est pas immobilisée ; on évite ainsi, lorsque la file est immobilisée par une butée à l'avant de la file, de soumettre ladite butée à un effort excessif. Lorsque la butée qui immobilise la rangée de palettes est éclipsée, l'effort développé par la courroie sur les ailerons, quoique faible, suffit à mettre en mouvement toutes les palettes de la rangée.

Dans une installation selon l'invention, en conséquence, on n'a besoin que de moteurs électriques de faible puissance pour la mise en mouvement et l'entretien du mouvement des courroies, même pour l'entraînement de nombreuses palettes dont chacune peut recevoir une ou des pièces relativement lourdes.

Sur les figures 6 à 8, on a montré une palette 21 qui, après avoir effectué un trajet rectiligne sur la voie 101 (figure 7) dans le sens de la flèche f₄, doit entreprendre un trajet rectiligne perpendiculaire au premier sur la voie 102 selon la flèche f₅. Sur le premier tronçon de voie, la palette est entraînée par une courroie 106 passant dans la première gorge 110 d'une poulie 107 montée à rotation folle autour d'un axe 108. Sur la seconde gorge 109 de ladite poule passe une courroie 111 passant également dans la gorge d'une seconde poule 112 à deux gorges entraînée à partir d'un moteur électrique 113 placé sous la face inférieure 99 du plancher 61, lequel se relève à son extrémité suivant un rebord 114. Dans la gorge supérieure 115 de la poulie 112 passe une seconde courroie 116. Celle-ci sert à l'entraînement de la palette 21 dans le sens de la flèche f₅.

On a montré sur la figure 7 un jeu de roulettes 117 servant au maintien de la courroie 106 pour l'entraînement des palettes dans le sens de la flèche f₄ et un jeu de roulettes 118 pour le maintien de la courroie 116 pour l'entraînement des palettes dans le sens de la flèche f₅.

Dans le sens de la flèche f₄, le côté 26 de la palette 21, opposé à celui servant à l'entraînement, est guidé par une réglette 119 et, dans le sens de la flèche f₅, la palette 21 est guidée par une réglette 121 faisant un angle droit avec la réglette 119, les deux réglettes étant fixées sur le plancher 61.

A la fin de son parcours dans le sens de la flèche f₄, la palette 21 est guidée par coopération de la face 191 de son plot 33 avec la face verticale interne 192 d'un dé de guidage 193 érigé sur le fond 61.

De même, dans la première partie de son parcours dans le sens de la flèche f₅, la palette 21 est guidée par coopération de la face 76 de son plot 31 avec la face verticale interne d'un dé de guidage 195.

La figure 8 montre en coupe, à plus grande échelle, l'extrémité de la palette 21 en fin de mouvement dans le sens de la flèche f₄, le galet 67 étant alors dirigé dans ledit sens.

Dès que commence l'entraînement dans le sens de la flèche f₅, le support de galet 66 tourne d'un angle droit d'une manière automatique, précisément sous l'effet de l'effort d'entraînement et la palette circule dans ledit sens avec autant de facilité qu'elle circulait auparavant dans le sens perpendiculaire, à savoir celui de la flèche f₄.

Sur la figure 2, on a montré schématiquement une palette présentant des ailerons 39₁, 39₂, 39₃ et 39₄, respectivement sur chacun des quatre côtés du corps de palette et reliés à celui-ci chacun par une lame de ressort 38.

Une telle palette est prévue pour son entraînement aussi bien dans un sens que dans le sens perpendiculaire et cela par des brins de courroie perpendiculaires entre eux et coopérant respectivement avec des ailerons perpendiculaires entre eux, sans que l'orientation de la palette se modifie.

Les brins de courroie perpendiculaires entre eux peuvent être au même niveau, comme montré sur la figure 6, ou à des niveaux différents.

Dans la forme de réalisation montrée sur la figure 9, la palette comprend seulement deux ailerons 39₃, 39₄, montés par l'intermédiaire de lames de ressort sur deux côtés opposés parallèles du corps de palette. Une telle palette est prévue pour des déplacements au cours desquels son orientation se modifie.

Dans l'un et l'autre cas, des variations légères dans le niveau du plancher 61 n'ont pas d'influence défavorable sur l'entraînement.

On se réfère maintenant aux figures 10 à 13 relatives à un dispositif propre à amener une palette dans un emplacement prédéterminé, aussi bien au point de vue longitudinal qu'au point de vue transversal, et à l'y maintenir, par exemple en vue de l'usinage ou l'assemblage de la pièce ou des pièces qu'elle porte.

En ledit emplacement, le fond 61 du poste 10 comprend, en correspondance de chacun des pots des palettes, une fenêtre rectangulaire, comme montré en 151 pour un plot (figure 12), la distance des faces opposées 152, 153 de la fenêtre, parallèles à la direction de circulation de la palette parvenant par ses pots à l'applomb desdites fenêtres, étant plus grande que la largeur desdits pots. A travers la fenêtre 151 fait saillie un tronçon de rail parallélépipédique 154 fixé, par sa partie faisant saillie au-dessous de la face inférieure 99 du fond 61, à la tige 155 d'un vérin 156 (figure 10) fixé sur le plancher 61. Le tronçon de rail 154 ménage, à sa face supérieure, un passage 157 pour le sabot 72 d'un plot, par exemple le pot 32, qui reste logé dans ledit tronçon de rail lorsque la palette s'arrête.

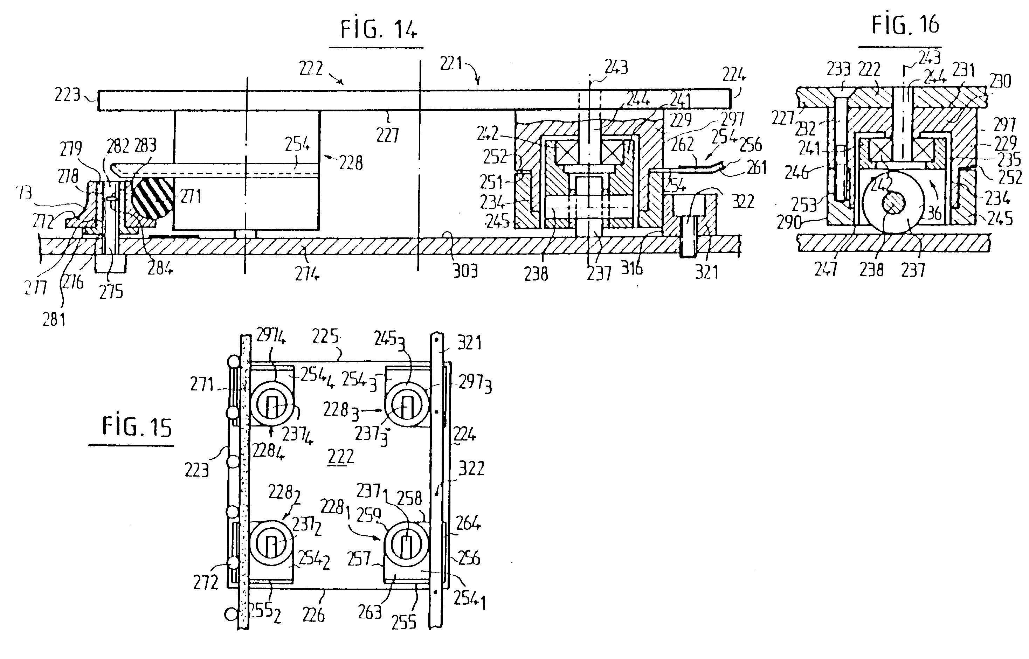

Au droit dudit tronçon de rail 154 est fixé, sur la face supérieure 74 du fond 61, un réceptacle 161, par des piliers latéraux 162, 163 (figure 13), et dont le corps 164, en forme générale d'U, ménage, par une découpe semi-circulaire 165 qu'il présente, une surface annulaire circulaire d'appui 166 pour la face inférieure 160 de la partie cylindrique 51 d'un plot. La surface d'appui annulaire 166 se termine vers la face interne 167 du réceptacle 161 par deux parties obliques ou rampes 169, 171, ascendantes à partir de leurs bords internes 172, 173.

A l'emplacement déterminé, chacun des plots d'une palette vient se loger dans le passage 157 correspondant, son galet 67 reposant sur le fond 174 dudit passage. Les vérins 156 sont ensuite actionnés dans le sens montré par la flèche f₆ sur la figure 12. La partie cylindrique 51 de chaque plot se rapproche du réceptacle 161 et lorsque les faces inférieures 160 des parties cylindriques 51 des plots 29, 31, 32, 33 coopèrent avec les rampes 169, 171, la palette 21 est soulevée par l'ascension le long de ces rampes, et cela jusqu'à ce que les surfaces cylindriques 51 desdits plots viennent en contact avec les découpes cylindriques 165 des réceptacles 161. La figure 12 montre la position finale du plot 32. Il est maintenu dans tous les sens à l'égard d'un mouvement quelconque. Il est donc à un emplacement rigoureusement prédéterminé. Son galet 67 est alors distant du fond du passage 157.

Dans la forme de réalisation montrée sur la figure 11, la palette 21 a ses plots 32 (et 31) logés dans des réceptacles 161 et rails 154, comme il vient d'être décrit en référence à la figure 12.

Par contre, les plots 33 et 29 coopèrent avec un simple bloc parallélépipédique 161' sur la face supérieure 182 duquel ils reposent par la face inférieure 160 de leur partie cylindrique 51.

Une remise de la palette en position de circulation est obtenue par un actionnement inverse des vérins 156. La palette est ramenée en une position où elle peut à nouveau être entraînée par le brin 181 de courroie.

Une palette comme montrée sur la figure 2 est utilisable avantageusement dans une installation telle que décrite dans la Demande de Brevet EP-A-0115357 publiée le 08-08-1984, et qui est une division d'une Demande EP-A-0050080 publiée le 21-04-1982, aux noms de Monsieur Maurice Prodel et de Monsieur Jacques Prodel. Elle permet d'y utiliser des brins d'entraînement perpendiculaires de même niveau.

On se réfère maintenant aux figures 14 à 16. Dans cette forme de réalisation, une palette 221 selon l'invention comprend un plateau 222 à contour rectangulaire, par exemple carré, limité par des côtés 223, 224, 225, 226. Au voisinage de chacun de ses angles, est fixé, sur la face inférieure 227 dudit plateau, un plot 228, qui comporte un corps cylindrique en cuvette 229 ménageant un fond 230 dont la face supérieure 231 est appliquée contre la face inférieure 227 du plateau 222 par au moins une vis 232, à tête 233. Le corps 229 se prolonge par une jupe 234 ménageant avec le fond 230 un logement 235 dans lequel est placé un dispositif de roulement 236. Le dispositif de roulement 236 comprend un galet 237 monté à rotation autour d'un axe horizontal 238 par l'intermédiaire de roulements à billes. Le dispositif de roulement 236 fait partie de la bague externe 241 d'un roulement à billes 242 à axe vertical 243 et qui est porté par une tige 244 traversant le plateau 222 et le fond 230. L'axe horizontal 238 est décalé par rapport à l'axe vertical 243, c'est-à-dire ne le rencontre pas.

La jupe 234 est entourée par un chapeau 245 fixé sur le corps 229 par une partie filetée 246 terminant la vis 232, ledit chapeau ménageant une ouverture centrale circulaire 247 pour le passage du dispositif de roulement 236.

Entre la face frontale annulaire 251 du corps 229 et la tranche supérieure 252 du chapeau 245 est serrée, - par l'intervention de la ou des parties filetées 246 des vis 232 coopérant avec des taraudages correspondants 253 desdits chapeaux -, une plaquette 254, ladite plaquette étant en un matériau élastique, avantageusement en acier. Elle a un contour sensiblement carré avec deux côtés rectilignes 255 et 256, externes, et deux côtés internes 257 et 258 raccordés par un arc circulaire 259, de même rayon que celui du corps 229 et du chapeau 245 du pot 228. Le bord des côtés 255 et 256 est légèrement relevé, l'angle entre la partie oblique 261 et la partie horizontale 262 étant de l'ordre de 15 degrés.

Les marges 263 et 264, adjacentes aux côtés 255 et 256 de la plaquette 254, sont revêtues d'un matériau destiné à conférer à ladite plaquette un coefficient de frottement convenable, et qui peut être du Rilsan (marque déposée).

Une palette 221 ainsi équipée de pots 228 présente donc au voisinage de chacun de ses angles deux marges, perpendiculaires entre elles, propres à coopérer à frottement, pour l'entraînement de la palette, avec un ou des brins mobiles, comme des brins de courroie.

Sur la figure 14, on a montré une telle palette dont le plot 228, sur la partie de gauche, coopère avec un brin de courroie 271, ledit brin de courroie prenant appui sur une roulette 272 à profil concave 273 montée au-dessus du plancher 274 d'un poste ou module faisant partie de l'installation. Le montage a lieu à hauteur ajustable par l'intervention d'une vis 275 dont la tige filetée 276 coopère avec le taraudage interne 277 d'une pièce intermédiaire 278, à corps cylindrique 279 et rebord annulaire inférieur 281, la position de ladite pièce intermédiaire étant fixée par coopération d'une vis supérieure 282 avec ledit taraudage, enfoncée jusqu'à butée de sa face inférieure 283 contre la face supérieure 284 de la tige filetée 276. C'est sur la pièce intermédiaire 278 qu'est montée à rotation la roulette 272.

Pour la circulation de la palette 221 sur le plancher 274, ladite palette repose par l'intermédiaire des dispositifs de roulement 236 comprenant les galets 237-1, 237-2, 237-3, 237-4 et son déplacement n'exige qu'un effort minime, précisément par suite de cette progression par l'intermédiaire de dispositifs de roulement, à billes. L'entraînement a lieu par coopération du brin de courroie 271 avec les plaquettes élastiques 254 à marges 267 rilsanisées, le réglage de la hauteur des roulettes 272 étant effectué pour qu'il existe, entre le brin de courroie et les marges rilsanisées, la pression requise pour l'entraînement de la palette porteuse de charge ; cette pression est relativement faible et l'effort d'entraînement maintenu à une valeur minime, rendu indépendante des irrégularités de construction par la possibilité de réglage de la position des roulettes 272.

Cette pression est réglée en fonction du poids des palettes pour assurer un entraînement sans aléa avec un effort minimal.

Avantageusement, la force de traction par frottement est ajustée à une valeur minimale. Il a été constaté qu'une force d'environ 200 g était suffisante pour entraîner toutes les palettes vides et pleines d'une installation.

Lorsque, dans celle-ci, par suite des rythmes divers de l'assemblage et/ou de l'usinage effectués en les divers postes ou modules, se constituent des files d'attente de palettes, les chocs d'accostage entre palettes sont les plus faibles qu'il est possible d'obtenir.

L'invention vise également une forme de réalisation, non représentée, selon laquelle la plaquette d'entraînement à frottement a un contour circulaire.

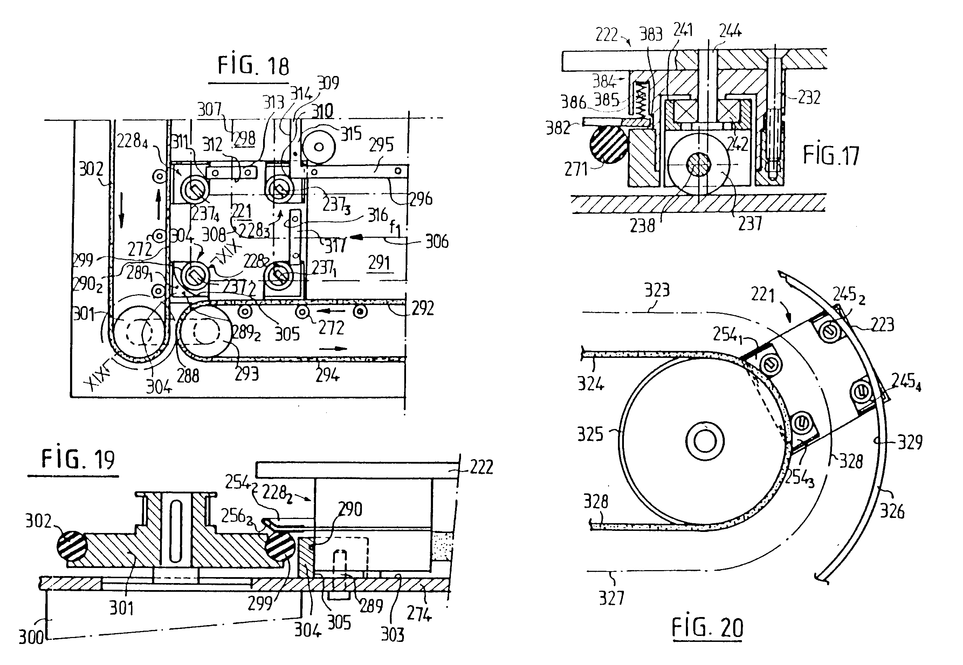

Dans la forme de réalisation montrée sur la figure 17, le volet 382 n'est pas en matériau élastique. Il est monté avec possibilité de translation le long d'une partie 383, de plus petit diamètre, du plot 384. Il est soumis à l'action de ressorts à boudin 385 répartis autour de la partie plus étroite 383, ou noyau, par exemple au nombre de trois, et logés respectivement dans des forages 386. C'est sous l'action desdits ressorts que le volet 382 est appliqué à pression contre le brin d'entraînement 271.

On se réfère maintenant aux figures 18 et 19.

Sur la figure 18, on a montré par la flèche f₁ le sens de circulation de la palette 221 dans une voie 291. Cette voie est limitée d'une part par le brin 292 d'une courroie qui passe sur une poulie 293 et se poursuit ensuite par un brin 294 parallèle au premier brin 292. Pendant son trajet le long de la voie 291, la palette 221 est guidée par une réglette 295, fixée sur la face supérieure du plancher 274, ladite réglette coopérant par sa face verticale interne 296 avec les surfaces cylindriques 297₃ et 297₄ (figure 14) des plots 228₃ et 228₄.

La voie 291 se poursuit par une voie 298, qui lui est perpendiculaire. Ladite voie 298 est limitée d'une part par le brin 299 d'une seconde courroie, destinée à entraîner la palette, et qui passe sur une poulie 301, entraînée par un moteur 300, laquelle distingue ainsi sur la courroie un second brin 302. Sur son brin moteur 299, la courroie est guidée par des roulettes 272.

L'entraînement de la poule 293 à partir du moteur 300 se fait grâce à une courroie intermédiaire 288.

A l'intersection des deux voies 291 et 298, à l'angle externe de celles-ci, est fixée, sur la face supérieure 303 du plancher 274, par des vis 289₁ et 289₂, une butée de raccordement 304 présentant une face curviligne 305. Ladite face est cylindrique circulaire et son axe se trouve sur la diagonale du carré défini par le contour de la palette 221 lorsque celle-ci vient coopérer par la surface cylindrique 290₂ du chapeau 245₂ avec ladite butée.

Dans cette position, la palette 221 est d'une part soumise à l'effet d'entraînement du brin 292 qui coopère avec le bord 255₂ de la plaquette 254₂, et d'autre part à l'effet d'entraînement du brin 299, perpendiculaire, qui coopère avec le bord perpendiculaire 256₂ de ladite plaquette.

C'est la coopération du plot 228₂ avec la face curviligne 305 de butée 304 qui impose à la palette sa trajectoire, laquelle comprend donc, pour son centre, une partie rectiligne 306, correspondant à la voie 291, une partie rectiligne 307, perpendiculaire à la première, correspondant à la voie 298, les deux parties rectilignes étant raccordées par une partie 308, en forme de quart de cercle, comme schématisé par la ligne mixte représentative de la trajectoire du centre de la palette sur la figure 18.

Dans la phase de transition entre la première partie 306 de la trajectoire et la seconde partie 307, le pot 228₃ de la palette coopère avec l'arête de raccordement 310 entre la réglette 295 et la réglette perpendiculaire 309. Le pot 228₄ coopère avec l'extrémité 311 de la face 312 d'une réglette 313 fixée sur le plancher 274 et ayant contribué au maintien de la trajectoire suivant la flèche f₁ dans la dernière partie de la course dans la voie 291. Dans la voie 298, perpendiculaire, la constance de l'orientation de la palette 21 est assurée par coopération du plot 228₃ avec la face 314 d'une réglette 315, et par la coopération du pot 228₁, avec la face 316 d'une réglette 317, fixée sur le plancher 274.

Lorsqu'une plaquette 254 coopère simultanément avec deux courroies perpendiculaires, le galet 237 du pot 228 dont elle fait partie s'oriente automatiquement en fonction des efforts d'entraînement qui s'exercent sur ladite plaquette.

Aussi bien dans la première phase que dans la seconde phase, qu'également au cours de la phase de raccordement, la position de la palette est définie d'une manière positive, sans possibilité de jeu ou de flottement.

A tout moment, les galets 237-1, 237-2, 237-3 et 237-4 ont leurs plans moyens parallèles à la direction de déplacement, cette orientation étant prise et conservée automatiquement en raison du montage à rotation des dispositifs de roulement 236 autour des axes 243 et du décalage desdits axes par rapport aux axes de rotation horizontaux 238 respectifs desdits galets.

Sur la figure 14, on a montré une réglette de guidage 321, fixée par des vis 322, parallèle à la rangée que constituent les roulettes successives 272 guidant le brin 271, ladite réglette coopérant avec la surface cylindrique externe 253 des chapeaux 245₁ et 245₃ pour ledit guidage.

Sur la figure 20, on a montré schématiquement une partie d'une installation prévue pour la circulation d'une palette suivant une trajectoire curviligne, dans l'exemple semi-circulaire. La palette 221 suit d'abord une trajectoire rectiligne 323 imposée par le brin 324 de courroie et la partie rectiligne d'une réglette de guidage opposée (non représentée sur le dessin). Ladite courroie passe ensuite sur une roue 325 et la réglette de guidage se poursuit par une partie semi-circulaire 326. On a montré sur la figure la palette dans la position qui précède de peu son arrivée dans la position d'éloignement maximal par rapport à la zone d'admission. Après cette position, la palette poursuit son trajet curviligne pour reprendre un trajet rectiligne, comme schématisé par la trajectoire 327 de son centre, parallèle à là trajectoire 323 et distante de celle-ci d'une longueur égale au diamètre du demi-cercle 328 de raccordement. Dans la trajectoire 327, l'entraînement de la palette a lieu par coopération des plaquettes 254₃ et 254₁ avec le brin de courroie 328 et le guidage par coopération des chapeaux cylindriques 245₄ et 245₂ avec la face de la réglette prévue à cet effet, lesdits chapeaux ayant également contribué au guidage de la palette par coopération avec la face interne 329 de la partie curviligne 326.

Dans cette forme de réalisation, le côté 223 de la palette, qui était le côté externe lorsque cette dernière circulait sur la voie supérieure 323, reste le côté externe de la palette lorsque celle-ci circule sur la voie inférieure parallèle.

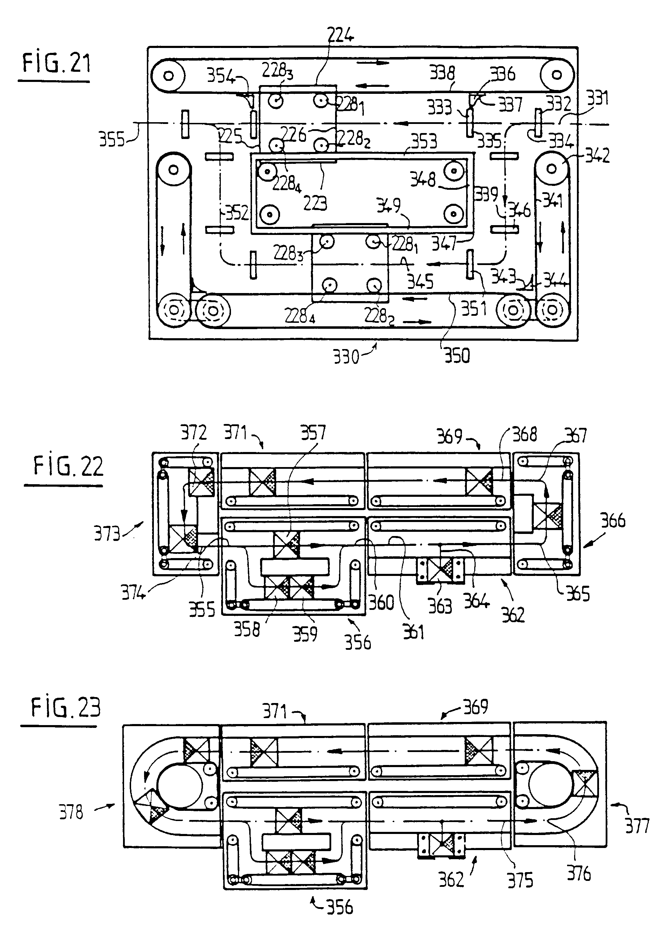

On se réfère maintenant à la figure 21 qui montre schématiquement un module 330 faisant partie d'une installation ou atelier flexible selon l'invention prévu pour la circulation de palettes comme on vient de les décrire. Dans ce module, une palette entre par une voie 331, qui prolonge une voie que présente un module adjacent. A l'entrée de ladite voie 331 sont prévues d'une part deux réglettes 332 et 333 dont les faces opératoires 334 et 335 sont perpendiculaires à la voie 331, ainsi qu'une butée 336 à face opératoire curviligne 337. La palette parvenant à l'entrée de la voie 331 et entraînée par le brin de courroie 338, change alors de direction de déplacement sans changer d'orientation d'une manière analogue à ce qui a été décrit en référence à la figure 18 : elle emprunte donc la voie perpendiculaire 339. Son déplacement dans cette voie a lieu par l'action du brin 341 d'une seconde courroie passant sur une poule 342.

La palette suit alors ladite voie jusqu'à ce que son pot inférieur droit 228₂ coopère avec la partie curviligne 343 d'un organe de butée 344 et, de manière analogue à ce qui a été décrit en référence aux figures 18 et 19, la palette poursuit son mouvement sans changement d'orientation, en empruntant la voie 345 perpendiculaire à la voie 339, le passage d'une voie à l'autre se faisant comme décrit ci-dessus. Au cours de ce passage, la palette est maintenue par une réglette 346 ainsi que par l'intersection 347 entre des réglettes 348 et 349. La réglette 351 est opératoire en fin de course de la palette dans la voie 339.

La palette, entraînée par le brin de courroie 350, parvient à la position qui est montrée et elle peut ensuite emprunter la voie 352 parallèle à la voie 339 dans des conditions analogues à ce qui a été décrit ci-dessus.

Elle peut aussi être immobilisée par tout moyen approprié dans une position quelconque le long du tronçon 345 de voie pour l'assemblage et/ou l'usinage d'une ou de pièces portées par la palette.

L'invention prévoit de monter la butée 336 à face curviligne 337 de manière éclipsable dans le plancher 274 du module. Lorsque la butée 336 est éclipsée, une palette parvenant à l'entrée de la voie 331 poursuit son chemin le long de ladite voie, la continuité du plancher étant assurée par la face supérieure de la butée 336 éclipsée, et à son guidage coopère alors une réglette 353. On a montré ladite palette à l'extrémité de la voie 331 ; son entraînement a lieu par coopération du brin 338 avec les plaquettes des pots 228₃ et 228₁, le guidage étant assuré par la réglette 353 coopérant avec les plots 228₄ et 228₂.

Pour la poursuite du mouvement de la palette le long de la voie 331, une butée curviligne 354 est éclipsée par enfoncement dans le plancher 274. Cette butée curviligne est utilisée par contre et rendue opératoire pour le passage d'une palette lui parvenant à partir du tronçon 352, et destinée à être évacuée du module par le tronçon de sortie 355.

On se réfère maintenant à la figure 22 qui montre un atelier flexible selon l'invention comprenant un module 356 du type décrit en référence à la figure 21.

Dans ledit module, c'est le tronçon 355 qui est la voie d'entrée et une palette pénétrant dans le module peut ou bien poursuivre directement sa voie comme montré en 357, ou bien être acheminée vers une voie externe, deux palettes 358 et 359 ayant été montrées en des positions où elles parviennent, qui peuvent être celles prévues pour l'assemblage et/ou l'usinage de pièces qu'elles portent.

La sortie 360 dudit module se raccorde à la voie d'entrée 361 d'un autre module 362, prévu pour l'usinage d'une pièce par une machine-outil comprenant un guichet 363 dans lequel est introduite la palette par la voie montrée en 364, perpendiculaire à la voie 361. Après usinage, la palette rejoint la voie principale 361 et celle-ci est raccordée à la voie d'entrée 365 d'un autre module 366, dans lequel la palette circule, sans changer d'orientation, suivant un trajet en forme d'U. La sortie 367 du module 366 est raccordée à l'entrée 368 d'un module de retour 369, lequel est de même largeur que le module 362 par rapport auquel il est placé en vis-à-vis. Ce premier module de retour se raccorde à un second module de retour 371, ainsi en regard du module 356 et de même largeur que celui-ci. La sortie du second module de retour se raccorde à l'entrée 372 d'un module 373, identique au module 366, dont la sortie 374 est raccordée à l'entrée 355 du module 356.

Dans une telle installation, des modules opératoires peuvent être échangés entre eux, permettant la transformation simple et rapide de l'installation, lui assurant ainsi ce qu'on appelle la flexibilité.

On a schématisé en chacun desdits modules les courroies servant à l'entraînement des palettes.

Dans la forme de réalisation montrée sur la figure 23, les modules 356, 362, 369 et 371 sont identiques aux modules portant les mêmes numéros de référence de la forme de réalisation précédemment décrite en référence à la figure 22.

Par contre, la sortie 375 du module 362 se raccorde à l'entrée 376 d'un module 377 dans lequel la palette suit effectivement un trajet en U, mais ne conserve pas une orientation constante, le déplacement de la palette étant, dans ce module, obtenu comme décrit plus haut en référence à la figure 20. La face ou le côté d'une palette tournée vers l'extérieur dans les modules 356 et 362 reste ainsi tournée vers l'extérieur dans les modules 369 et 371. Ce dernier est suivi par un module 378 identique au module 377.

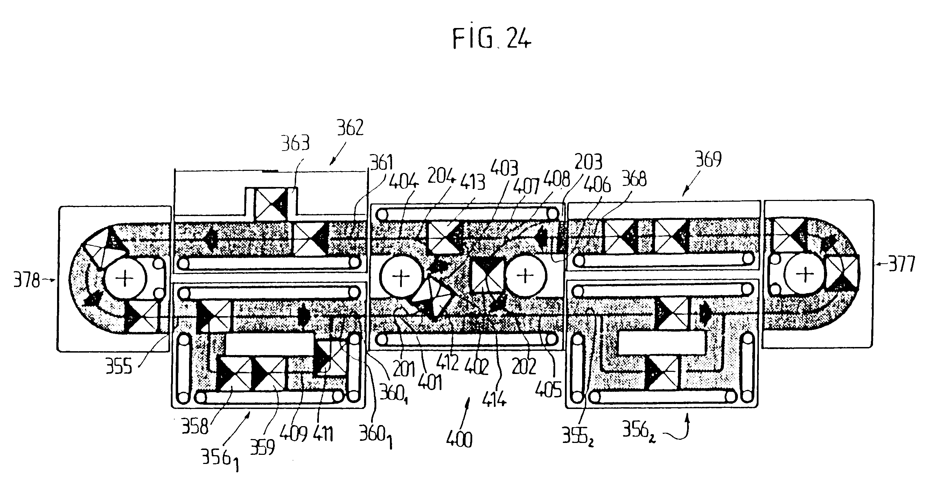

On se réfère maintenant à la figure 24. Celle-ci représente une réalisation d'installation qui comprend deux modules 356₁ et 356₂ identiques entre deux et identiques au module 356 de la forme de réalisation montrée sur la figure 23, deux modules d'extrémité 377 et 378 identiques entre eux et identiques aux modules 377 et 378 de la réalisation montrée sur la figure 23. Le module 377 est suivi par un module 369 identique au module 369 montré sur la figure 23 et ainsi placé en vis-à-vis du module 356₂ de la rangée longitudinale antérieure de modules. En regard et en vis-à-vis du module 356₁ est placé un module 362 identique au module 362 de la forme de réalisation montrée sur la figure 23 et qui comprend ainsi un guichet 363.

Entre l'ensemble constitué par les modules 356₁ et 363, de même largeur, et l'ensemble constitué par les modules 369 et 356₂, est interposé un module 400, qu'on peut appeler « module de court-circuit » et qui ménage une première voie 401 formant la prolongation de la voie 360₁ de sortie du module 356₁. La voie 401 se prolonge d'une part par une voie rectiligne 402, alignée avec la voie 401, et d'autre part par une voie curviligne 403, semi-circulaire, qui se raccorde avec une voie de sortie 404 du module 400, laquelle est dans le prolongement de la voie d'entrée 361 du module 362. La voie 402 du module 400 se prolonge jusqu'à la voie de sortie 405 dudit module, laquelle se raccorde avec la voie d'entrée 355₂ du module 356₂.

Le module 400 comprend une seconde voie d'entrée 406 qui est dans le prolongement de la voie 368 du module de retour 369. La voie d'entrée 406 se divise en une voie 407, rectiligne, en alignement avec la voie d'entrée 406, laquelle se raccorde avec la voie de sortie 404 du module 400. De la voie 406 est également issue une voie curviligne 408 qui se raccorde à la voie de sortie 405 du module 400.

Dans une telle installation, il est possible de faire circuler une palette, d'abord dans le module 356₁, et cela soit en traversant le module par sa voie 355, sans que la pièce qu'elle porte parvienne dans la voie extérieure 409, soit au contraire en faisant parvenir la palette dans ladite voie 409, deux telles palettes étant montrées en 358 et 359 où les pièces qu'elles portent peuvent être traitées.

A la sortie 360₁ du module 356₁, que la palette provienne directement de la voie d'entrée 355 ou bien qu'elle provienne de la voie extérieure 409, comme montré en 411, la palette pénètre dans le module 400 par la voie d'entrée 401 et là elle peut, ou bien être dirigée vers le module 363 en empruntant la voie curviligne 403, comme montré en 412, ou bien traverser le module 400 sur toute sa largeur pour pénétrer dans le module 356₂.

De même, une palette sortant du module de retour 369 peut, ou bien traverser dans sa longueur le module 400 en empruntant la voie 407, comme montré en 413, ou bien être acheminée par la voie curviligne 408 vers le module 356₂, comme montré en 414.

## Revendications

1. Installation pour le déplacement d'une ou plusieurs palettes porte-pièces pour l'assemblage et/ou l'usinage d'une pièce ou de pièces portée(s) par la ou les palettes, dans laquelle une palette comporte des moyens de roulement pour son déplacement sur un support et des moyens pour son entraînement par un brin en mouvement continu en fonction du déplacement à réaliser,
caractérisée en ce que le support est un plancher (20) et les moyens de roulement (29, 31, 32, 33) sont autodirecteurs, c'est-à-dire propres à faire circuler la palette (21) sur le plancher suivant un trajet quelconque, rectiligne ou curviligne, et ne sont en eux-mêmes guidés d'aucune manière, l'entraînement de la palette ayant lieu par une plaquette qu'elle comporte, montée élastiquement et propre à coopérer à frottement avec un brin (55) en mouvement, tout en pouvant se déplacer par rapport à celui-ci, ou simultanément avec plusieurs brins (106, 116) en mouvement dirigés différemment, permettant ainsi le déplacement de la palette sur le plancher suivant un mouvement, indépendant de la direction du ou des brins, qui conserve ou modifie, selon le guidage de la palette, l'orientation de celle-ci dans l'espace pendant ses changements de direction.

2. Installation selon la revendication 1, caractérisée en ce que les moyens de roulement comprennent un galet (67, 237).

3. Installation selon la revendication 2, caractérisée en ce que le galet (67, 237) est monté sur un support (66, 241) à rotation autour d'un axe horizontal (68, 238), ledit support étant monté à rotation autour d'un axe vertical (62, 243), ledit axe horizontal (68, 238) étant décalé par rapport audit axe vertical (62, 243).

4. Installation selon la revendication 3, caractérisée en ce que les moyens de roulement comprennent quatre galets (67; etc.; 237₁, 237₂, 237₃, 237₄) montés suivant une configuration rectangulaire concentrique à la configuration de la palette.

5. Installation selon la revendication 4, caractérisée en ce que chacun des galets (67, 237) est porté par un plot (29, 31, 32, 33, 228) dépendant du corps de palette (22, 222).

6. Installation selon la revendication 5, caractérisée en ce que chaque plot (29, 31, 32, 33; 228₁, 228₂, 228₃, 228₄) comporte un corps fixe (43, 230) dans lequel est monté à rotation le support du dispositif de roulement (66; 236).

7. Installation selon la revendication 1, caractérisée en ce que la palette (221) comprend, au voisinage de chacun de ses angles, un organe à pression élastique (254, 382) destiné à coopérer avec le brin d'entraînement (271) ou analogue pour l'entraînement par frottement de la palette.

8. Installation selon la revendication 7, caractérisée en ce que ledit organe est une plaquette (254; 382) sensiblement carrée.

9. Installation selon la revendication 7, caractérisée en ce que la palette comprend quatre organes à pression élastique (254₁, 254₂, 254₃, 254₄) disposés respectivement à chacun de ses angles.

10. Installation selon la revendication 9, caractérisée en ce que chacun des organes à pression élastique (254, 182) est porté par un plot (228) qui comprend le dispositif de roulement (236).

11. Installation selon la revendication 7, caractérisée en ce que la pression élastique dudit organe (254) résulte de la nature du matériau qui le constitue.

12. Installation selon la revendication 8, caractérisée en ce que chaque plaquette (254) est serrée entre deux parties (229, 245) constitutives du plot (228).

13. Installation selon la revendication 7, caractérisée en ce que chaque organe est en matériau rigide et est soumis à l'action de ressorts pour son application contre le brin, ledit organe étant monté à translation sur la partie fixe du plot.

14. Installation selon la revendication 7, caractérisée en ce que les organes à pression élastique (254, 382) sont propres à coopérer avec un brin d'entraînement curviligne (324).

15. Installation selon la revendication 7, caractérisée en ce que la pression de l'organe élastique (254, 382) sur le brin (271) de courroie ou analogue est réglable pour être ajustée à une valeur minimale de force d'entraînement des palettes.

16. Installation selon l'une ou plusieurs des revendications 7 à 13, caractérisée en ce que des roulettes de guidage (84, 272) du brin d'entraînement (55, 271) sont de hauteur ajustable par rapport au plancher (61, 303) sur lequel circulent les palettes, pour permettre le réglage de la force de frottement des organes à pression élastique sur le ou les brins d'entraînement des palettes.

17. Installation selon la revendication 1, caractérisée en ce que des moyens de butée (193, 321, 326, 295, 313, 317, 315) sont prévus, solidaires du fond (61, 303) pour le guidage de la palette (21, 221).

18. Installation selon la revendication 17, caractérisée en ce que le brin d'entraînement (55, 271, 324, 328) ou analogue constitue lui-même une butée latérale pour le guidage de la palette (21, 221).

19. Installation selon la revendication 17, caractérisée en ce que, pour le changement de direction dans le trajet d'une palette, le plancher de l'installation sur lequel circulent les palettes (303) comprend une butée curviligne (304) propre à coopérer avec un plot (228) des palettes pour lui imposer une course curviligne à l'extrémité de son trajet dans la première voie (306) jusqu'au débouché dans la seconde voie rectiligne (307), assurant ainsi à la palette une circulation sans chocs.

20. Installation selon la revendication 17 ou 18, caractérisée en ce qu'au passage d'une direction à une direction perpendiculaire le plancher comporte des moyens de guidage (295, 313, 304, 317, 315, 292, 299) qui imposent à une palette un déplacement sans modification de son orientation.

21. Installation selon la revendication 14, caractérisée en ce que les changements de direction circulaire se font par des moyens de guidage (326) qui imposent à une palette un déplacement avec modification constante de son orientation.

22. Installation selon l'une des revendications 14 à 21, caractérisée en ce que les plots (228₁, 228₂, 228₃, 228₄) coopèrent avec des moyens de butée rectiligne et courbe qui guident le trajet des palettes.

23. Installation selon la revendication 22, caractérisée en ce que chaque plot (228) comprend une portée cylindrique (245) pour la coopération avec les moyens de butée.

24. Installation selon l'une ou plusieurs des revendications précédentes, caractérisée en ce qu'un même organe à pression élastique (254, 382) est propre à coopérer avec des brins d'entraînement perpendiculaires (292, 299) situés à un même niveau.

25. Installation selon la revendication 24, caractérisée en ce que deux poulies d'entraînement (293, 301) sont prévues respectivement pour deux brins perpendiculaires adjacents (292, 299) et sont reliées entre elles par une courroie ou analogue (288) interposée entre des gorges de même niveau prévues sur l'une et l'autre poulies, un moteur unique étant ainsi propre à l'entraînement des deux brins perpendiculaires.

26. Palette destinée à une installation selon l'une quelconque des revendications 1 à 25, comprenant des moyens de roulement autodirecteurs, c'est-à-dire propres à faire circuler la palette (21) sur un plancher de l'installation suivant un trajet quelconque, rectiligne ou curviligne, sans être guidée, caractérisée en ce qu'elle comporte pour son entraînement une plaquette montée élastiquement et propre à coopérer à frottement avec un brin (55) en mouvement, tout en pouvant se déplacer par rapport à celui-ci, ou simultanément avec plusieurs brins (106, 116) en mouvement dirigés différemment.

27. Palette selon la revendication 26, caractérisée en ce que, de forme carrée, elle comprend quatre plaquettes sensiblement carrées disposées respectivement en chacun de ses angles.

28. Palette selon la revendication 27, caractérisée en ce que chaque plaquette à pression élastique (254, 382) est portée par un plot (228) qui comprend le dispositif de roulement (236).

## Claims

1. An installation for the displacement of one or more part-holding pallets for the assembly and/or machining of a part or parts carried by the pallet or pallets, in which a pallet comprises rolling means for its displacement on a support and means for driving it by a belt run moving continuously as a function of the displacement to be achieved, characterised in that the support is a deck (20) and the rolling means (29, 31, 32, 33) are self-directing, that is to say capable of causing the pallet (21) to circulate on the deck along any path, whether rectilinear or curvilinear, and are not themselves guided in any way, the driving of the pallet being effected via a pad which it comprises, which is resiliently mounted and is capable of co-operating frictionally with a moving belt run (55) while being able to travel relative thereto, or simultaneously with several belt runs (106, 116) moving in different directions, thus allowing the displacement of the pallet on the deck in a movement which is independent of the direction of the belt run or runs and which maintains or modifies the orientation of the pallet in space during its changes of direction, depending on the guidance of the pallet.

2. An installation according to claim 1, characterised in that the rolling means comprise a roller (67, 237).

3. An installation according to claim 2, characterised in that the roller (67, 237) is mounted on a support (66, 241) which rotates about a horizontal shaft (68, 238), said support being mounted rotatably about a vertical shaft (62, 243), said horizontal shaft (68, 238) being offset relative to said vertical shaft (62, 243).

4. An installation according to claim 3, characterised in that the rolling means comprise four rollers (67; etc; 237₁, 237₂, 237₃, 237₄) mounted in a rectangular configuration concentric with the configuration of the pallet.

5. An installation according to claim 4, characterized in that each of the rollers (67, 237) is carried by a block (29, 31, 32, 33, 228) depending on the pallet body (22, 222).

6. An installation according to claim 5, characterized in that each block (29, 31, 32, 33; 228₁, 228₂, 228₃, 228₄) comprises a stationary body (43, 230) in which the support of the rolling device (66; 236) is rotatably mounted.

7. An installation according to claim 1, characterized in that the pallet (221) comprises, in the region of each of its corners, a resilient pressure member (254, 382) intended to co-operate with the driving belt run (271) or the like for driving the pallet by friction.

8. An installation according to claim 7, characterised in that said member is a substantially square pad (254; 382).

9. An installation according to claim 7, characterized in that the pallet comprises four resilient pressure members (254₁, 254₂, 254₃, 254₄) arranged respectively at each of its corners.

10. An installation according to claim 9, characterised in that each of the resilient pressure members (254, 182) is carried by a block (228) which comprises the rolling device (236).

11. An installation according to claim 7, characterized in that the resilient pressure of said member (254) results from the nature of the material forming it.

12. An installation according to claim 8, characterized in that each pad (254) is gripped between two constituent parts (229, 245) of the block (228).

13. An installation according to claim 7, characterized in that each member is made of rigid material and is subjected to the action of springs for application thereof against the belt run, said member being mounted so as to perform translational movement on the fixed part of the block.

14. An installation according to claim 7, characterized in that the resilient pressure members (254, 382) are capable of co-operating with a curvilinear driving belt run (324).

15. An installation according to claim 7, characterized in that the pressure of the resilient member (254, 382) on the belt run (271) or the like is adjustable so that it can be set at a minimum value for the pallet driving force.

16. An installation according to one or more of claims 7 to 13, characterized in that guide wheels (84, 272) for the driving belt run (55, 271) are adjustable in height relative to the deck (61, 303) on which the pallets circulate to allow the frictional force of the resilient pressure members on the pallet driving belt run or runs to be adjusted.

17. An installation according to claim 1, characterized in that abutments (193, 321, 326, 295, 313, 317, 315) which are integral with the base (61, 303) are provided for guiding the pallet (21, 221).

18. An installation according to claim 17, characterized in that the driving belt run (55, 271, 324, 328) or the like itself forms a lateral abutment for the guidance of the pallet (21, 221).

19. An installation according to claim 17, characterized in that, for the change of direction in the path of a pallet, the deck of the installation on which the pallets (303) circulate comprises a curvilinear abutment (304) capable of co-operating with a block (228) of the pallets to impose on them a curvilinear course at the end of their travel in the first track (306) until they emerge in the second rectilinear track (307) thus ensuring that the pallet circulates smoothly.

20. An installation according to claim 17 or 18, characterised in that when passing from one direction to a perpendicular direction, the deck comprises guiding means (295, 313, 304, 317, 315, 292, 299) which impose displacement on the pallet without modifying its orientation.

21. An installation according to claim 14, characterised in that the changes of circular direction are effected by guiding means (326) which impose a displacement on a pallet with constant modification of its orientation.

22. An installation according to one of claims 14 to 21, characterised in that the blocks (228₁, 228₂, 228₃, 228₄) co-operate with the rectilinear and curved abutments which guide the travel of the pallets.

23. An installation according to claim 22, characterised in that each block (228) comprises a cylindrical bearing (245) for co-operation with the abutments.

24. An installation according to one or more of the preceding claims, characterised in that the same resilient pressure member (254, 382) is capable of co-operating with perpendicular driving belt runs (292, 299) located at the same level.

25. An installation according to claim 24, characterised in that two driving pulleys (293, 301) are provided respectively for two adjacent perpendicular belt runs (292, 299) and are connected to one another by a belt or the like (288) interposed between the grooves at the same level provided on both pulleys, a single motor thus being capable of driving the two perpendicular belt runs.

26. A pallet intended for an installation according to any one of claims 1 to 25, comprising self-directing rolling means, that is to say rolling means which are capable of causing the pallet (21) to circulate on a deck of the installation along any path, whether rectilinear or curvilinear, without being guided, characterized in that it comprises, for the driving thereof, a resiliently mounted pad capable of co-operating frictionally with a moving belt run (55) while being able to travel relative thereto or simultaneously with several belt runs (106, 116) moving in different directions.

27. A pallet according to claim 26, characterized in that it is square in shape and comprises four substantially square pads arranged respectively at each of its corners.

28. A pallet according to claim 27, characterized in that each resilient pressure pad (254, 382) is carried by a block (228) which comprises the rolling device (236).

## Patentansprüche

1. Einrichtung zur Verschiebung einer oder mehrerer Teile tragender Paletten für den Zusammenbau und/oder die Bearbeitung eines oder mehrerer von der oder den Paletten getragener Teile, bei der eine Palette Rollmittel für ihre Verschiebung auf einem Träger und Mittel für ihre Mitnahme durch einen Trum in kontinuierlicher Bewegung je nach auszuführender Verschiebung enthält, dadurch gekennzeichnet, daß es sich bei dem Träger um einen Boden (20) handelt und die Rollmittel (29, 31, 32, 33) selbstlenkend, d.h. dazu geeignet sind, die Palette (21) auf dem Boden in einer beliebigen Bahn, geradlinig oder gekrümmt, umlaufen zu lassen, und selbst auf keine Weise geführt sind, wobei die Mitnahme der Palette mittels eines Blättchens, das sie enthält, erfolgt, welches elastisch befestigt und dazu geeignet ist, reibungsmäßig mit einem Trum (55) in Bewegung zusammenzuwirken, während sie ihm gegenüber verschiebbar ist, oder gleichzeitig mit mehreren in verschiedenen Richtungen gelenkten Trumen (106, 116) in Bewegung, wodurch die Verschiebung der Palette auf dem Boden in einer von der Richtung des Trums oder der Trume unabhängigen Bewegung gestattet wird, die entsprechend der Führung der Palette deren Ausrichtung im Raum während ihrer Richtungsänderungen beibehält oder verändert.

2. Einrichtung nach Anspruch 1, dadurch gekennzeichnet, daß die Rollmittel eine Laufrolle (67, 237) umfassen.

3. Einrichtung nach Anspruch 2, dadurch gekennzeichnet, daß die Laufrolle (67, 237) so auf einen Träger (66, 241) angebracht ist, daß sie um eine horizontale Achse (68, 238) drehbar ist, wobei der Träger um eine vertikale Achse (62, 243) drehbar angebracht ist und die horizontale Achse (68, 238) gegenüber der vertikalen Achse (62, 243) versetzt ist.

4. Einrichtung nach Anspruch 3, dadurch gekennzeichnet, daß die Rollmittel vier Laufrollen (67; usw.; 237₁, 237₂, 237₃, 237₄) umfassen, die in einer zur Konfiguration der Palette konzentrischen, rechteckigen Konfiguration angebracht sind.

5. Einrichtung nach Anspruch 4, dadurch gekennzeichnet, daß jede der Laufrollen (67, 237) von einem Anschlag (29, 31, 32, 33, 228) getragen wird, der dem Körper der Palette (22, 222) zugehörig ist.

6. Einrichtung nach Anspruch 5, dadurch gekennzeichnet, daß jeder Anschlag (29, 31, 32, 33; 228₁, 228₂, 228₃, 228₄) einen festen Körper (43, 230) aufweist, in dem der Träger der Rollanordnung (66; 236) drehbar angeordnet ist.

7. Einrichtung nach Anspruch 1, dadurch gekennzeichnet, daß die Palette (221) in der Nähe jeder ihrer Ecken ein elastisches Druckorgan (254, 382) enthält, das dazu bestimmt ist, mit dem Mitnahmetrum (271) oder dergleichen zur Mitnahme der Palette durch Reibung zusammenzuwirken.

8. Einrichtung nach Anspruch 7, dadurch gekennzeichnet, daß es sich bei dem Organ um ein im wesentlichen viereckiges Blättchen (254; 382) handelt.

9. Einrichtung nach Anspruch 7, dadurch gekennzeichnet, daß die Palette vier elastische Druckorgane (254₁, 254₂, 254₃, 254₄) enthält, die jeweils in jeder ihrer Ecken angeordnet sind.

10. Einrichtung nach Anspruch 9, dadurch gekennzeichnet, daß jedes der elastischen Druckorgane (254, 182) von einem Anschlag (228) getragen wird, der die Rollanordnung (236) umfaßt.

11. Einrichtung nach Anspruch 7, dadurch gekennzeichnet, daß der elastische Druck des Organs (254) von der Art des Materials, aus dem es besteht, herrührt.

12. Einrichtung nach Anspruch 8, dadurch gekennzeichnet, daß jedes Blättchen (254) zwischen zwei Bestandteilen (229, 245) des Anschlags (228) festgeklemmt ist.

13. Einrichtung nach Anspruch 7, dadurch gekennzeichnet, daß jedes Organ aus steifem Material besteht und für seine Anlage gegen den Trum der Wirkung von Federn unterworfen ist, wobei das Organ verschiebbar auf dem festen Teil des Anschlags angebracht ist.

14. Einrichtung nach Anspruch 7, dadurch gekennzeichnet, daß die elastischen Druckorgane (254, 382) dazu geeignet sind, mit einem gekrümmten Mitnahmetrum (324) zusammenzuwirken.

15. Einrichtung nach Anspruch 7, dadurch gekennzeichnet, daß der Druck des elastischen Organs (254, 382) auf den Riementrum (271) oder dergleichen regulierbar ist, um auf einen Mindestwert der Mitnahmekraft der Paletten eingestellt zu werden.

16. Einrichtung nach einem oder mehreren der Ansprüche 7 bis 13, dadurch gekennzeichnet, daß die Führungsrollen (84, 272) des Mitnahmetrums (55, 271) gegenüber dem Boden (61, 303), auf dem die Paletten umlaufen, in der Höhe verstellbar sind, um die Reibungskraft der elastischen Druckorgane auf den Mitnahmetrum oder die Mitnahmetrumen der Paletten regulieren zu können.

17. Einrichtung nach Anspruch 1, dadurch gekennzeichnet, daß zur Führung der Palette (21, 221) mit dem Boden (61, 303) verbundene Stoppermittel (193, 321, 326, 295, 313, 317, 315) vorgesehen sind.

18. Einrichtung nach Anspruch 17, dadurch gekennzeichnet, daß der Mitnahmetrum (55, 271, 324, 328) oder dergleichen zur Führung der Palette (21, 221) selbst einen seitlichen Stopper bildet.

19. Einrichtung nach Anspruch 17, dadurch gekennzeichnet, daß der Boden der Vorrichtung, auf dem die Paletten (303) umlaufen, zur Richtungsänderung der Bahn einer Palette einen gekrümmten Stopper (304) umfaßt, der dazu geeignet ist, mit einem Anschlag (228) der Paletten zusammenzuwirken, um diesem am Ende seiner Bahn auf dem ersten Weg (306) bis zur Einmündung in einen zweiten geradlinigen Weg (307) einen gekrümmten Verlauf aufzuerlegen, wodurch ein stoßfreies Umlaufen der Palette gewährleistet wird.

20. Einrichtung nach Anspruch 17 oder 18, dadurch gekennzeichnet, daß beim Übergang von einer Richtung auf eine senkrechte Richtung der Boden Führungsmittel (295, 313, 304, 317, 315, 292, 299) enthält, die einer Palette eine Verschiebung ohne Änderung ihrer Ausrichtung auferlegen.

21. Einrichtung nach Anspruch 14, dadurch gekennzeichnet, daß die Umlaufrichtungsänderungen über Führungsmittel (326) erfolgen, die einer Palette eine Verschiebung mit konstanter Änderung ihrer Ausrichtung auferlegen.

22. Einrichtung nach einem der Ansprüche 14 bis 21, dadurch gekennzeichnet, daß die Anschläge (228₁, 228₂, 228₃, 228₄) mit geradlinigen und gekrümmten Stoppermitteln zusammenwirken, die die Bahn der Paletten führen.

23. Einrichtung nach Anspruch 22, dadurch gekennzeichnet, daß jeder Anschlag (228) eine zylindrische Lagerfläche (245) zum Zusammenwirken mit den Stoppermitteln umfaßt.

24. Einrichtung nach einem oder mehreren der vorhergehenden Ansprüche, dadurch gekennzeichnet, daß ein und dasselbe elastische Druckorgan (254, 382) dazu geeignet ist, mit den senkrechten Mitnahmetrumen (292, 299), die sich auf einer Höhe befinden, zusammenzuwirken.

25. Einrichtung nach Anspruch 24, dadurch gekennzeichnet, daß jeweils für zwei senkrechte, benachbarte Trume (292, 299) zwei Antriebsscheiben (293, 301) vorgesehen sind, die über einen Riemen (288) oder dergleichen miteinander verbunden sind, welcher sich in den in den beiden Scheiben mit gleicher Höhe vorgesehenen Nuten befindet, wobei somit ein einziger Motor zum Antrieb der beiden senkrechten Trume geeignet ist.

26. Palette für eine Einrichtung nach einem der Ansprüche 1 bis 25, die selbstlenkende Rollmittel enthält, d.h., die dazu geeignet sind, die Palette (21) auf einem Boden der Vorrichtung in einer beliebigen Bahn, geradlinig oder gekrümmt, ohne geführt zu sein, umlaufen zu lassen, dadurch gekennzeichnet, daß sie für ihre Mitnahme ein elastisch angebrachtes Blättchen enthält, das dazu geeignet ist, mit einem Trum (55) in Bewegung reibungsmäßig zusammenzuwirken, während sie sich ihm gegenüber verschieben kann, oder gleichzeitig mit mehreren in verschiedenen Richtungen gelenkten Trumen (106, 116) in Bewegung.

27. Palette nach Anspruch 26, dadurch gekennzeichnet, daß sie in quadratischer Form vier im wesentlichen quadratische Blättchen umfaßt, die jeweils in jeder ihrer Ecken angeordnet sind.

28. Palette nach Anspruch 27, dadurch gekennzeichnet, daß jedes elastische Druckblättchen (254, 382) von einem Anschlag (228) getragen wird, der die Rollanordnung (236) umfaßt.
